# EUROPEAN PATENT APPLICATION

(11) **EP 1 056 019 A1**
(43) Date of publication of application: **29.11.2000**
(21) Application number: 99110325.0
(22) Date of filing: 27.05.1999
(51) Int. Cl.: G06F 13/40

(54) **Computer bus extension cable**

(71) Applicant: DEUTSCHE THOMSON-BRANDT GMBH, 78048 Villingen-Schwenningen (DE)
(72) Inventor: Hepper, Dietmar, 30419 Hannover (DE); Cahnbley, Jens, 21400 Reinstorf/Sülbeck (DE)
(74) Representative: Wördemann, Hermes, Dipl.-Ing.

(57) **Abstract**

The invention proposes an extension cable with a female and a male IEEE 1394 6-pin connector. An IEEE 1394 Physical Layer circuit (PHY) is placed in the box of the female connector or close to it. This circuit (PHY) is powered by the power available through the cable and behaves like a repeater. By concatenating several of these "active" cables even longer distances could be managed.

## Description

### Background

In the IEEE 1394 standard a cable environment is described. The cable environment is a network of nodes connected by point-to-point links called physical connections. The physical connection consists of a port on each node's PHY and the cable between them. A PHY can have multiple ports, which allows a branching multihop. The primary restriction is that nodes must be connected together as an acyclic graph, no loops. The cable PHY translates this physical point-to-point topology into the virtual broadcast bus expected by higher layers. The cable PHY does this by taking all data received on one port, resynchronizing it to a local clock, and repeating it out all of its other ports.

Cable assemblies consist of two identical plug connectors joined by a length of cable material. The suggested maximum length is 4.5 m. This is to assure that a maximally-configured cable environment does not exceed the length over which the end-to-end signal propagation delay would exceed the allowed time. Longer cables lengths are possible if special considerations is given to the actual Serial Bus system topology to be used.

All multiple port nodes present on a Serial Bus in the cable environment are, by definition, repeater nodes. This is the minimum capability required and consists of an active physical layer. The PHY may be powered from the bus (via the power/ground pair in the Serial Bus cable) or from some other source. Repeater nodes shall:
a) have an active physical layer, and
b) function as an accurate signal repeater to propagate the signal state from the PHY port conditioned for reception to all other PHY ports conditioned for transmission, and
c) participate in the cable initialization and normal arbitration phases, and be capable of functioning as the root of a
   Serial Bus, and
d) reconfigure their operational characteristics in response to PHY configuration packets.

### Invention

It is an object of the present invention to disclose a device, which allows connections between two devices, having a larger distance from each other as recommended by the standard.

According to the invention, this object is achieved by means of the features specified in main claims. Advantageous designs and developments are specified in subclaims.

An extension cable with a female and a male IEEE 1394 6-pin connector is formed. An IEEE 1394 Physical Layer circuit is placed in the box of the female or male connector or close to it. The box of the connector for carrying the IEEE 1394 Physical Layer circuit is chosen, which is distant from the device to be plugged in. This circuit is powered by the power available through the cable and behaves like a repeater. By concatenating several of these "active" cables even longer distances could be managed.

Longer cable lengths are possible compared to the specified recommended maximum IEEE 1394 6-pin cable length. Not only duplication of the cable length is possible, even multiples of the allowed length is possible. Easy handling - due to a female and a male connector the repeater is always at the right place - and simplicity of production - only one type of extension cable (if desired) - are further advantages.

Wherever a repeater helps bridging longer distances and where power is available through the cable this invention can be used. If only very little power is required and power is not available through the cable, a battery can be mounted in the repeater box.

### Drawings

Embodiments of the invention are described with reference to the accompanying drawing, which show in:

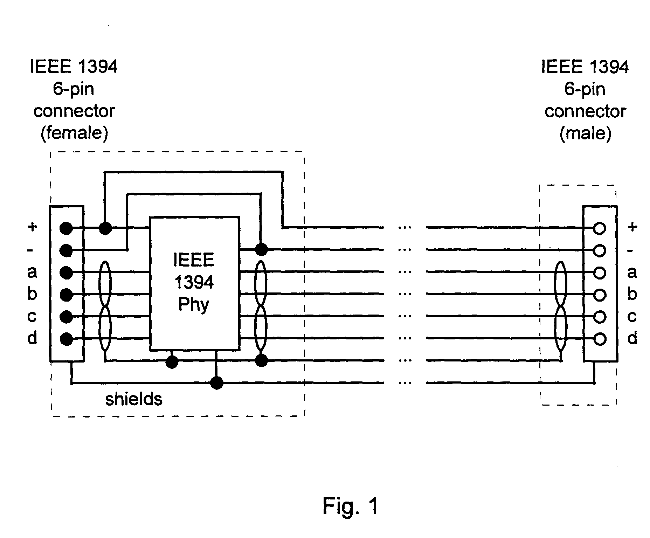

- Fig. 1: Bus extension cable

### Exemplary embodiments

Exemplary embodiments of the invention are explained in more detail in the following description.

Fig. 1 shows a bus extension cable. The extension cable is formed with a female and a male IEEE 1394 6-pin connector. An IEEE 1394 Physical Layer PHY circuit is placed in a box of the female connector or close to it. This circuit is powered by the power available through the cable and behaves like a repeater.

By concatenating several of these "active" cables even longer distances could be managed. Alternatively, IEEE 1394 Physical Layer PHY circuits can be placed within one cable, powered by the power available through the cable.

In a further embodiment the IEEE 1394 Physical Layer PHY circuit can be powered by an external source.

## Claims

1. Bus extension cable with a female and a male connector, having data lines as well as power supply lines, characterized by, that the bus extension cable includes a repeater (PHY), which is connected to one of the connectors.

2. Bus extension cable according to claim 1, characterized by, that the repeater (PHY) is placed in the housing of the connector.

3. Bus extension cable according to claim 1, characterized in, that the repeater (PHY) is placed nearby the housing of the connector and is protected by the isolation of the cable.

4. Bus extension cable according to claim 1, characterized in, that the repeater (PHY) is connected to the shielding of the connector.

5. Bus extension cable according to claim 1, characterized in, that more than one repeater (PHY) is incorporated within the cable.

6. Bus extension cable according to claim 1, characterized in, that the repeater (PHY) is powered by an external source.
